# EUROPEAN PATENT APPLICATION

(11) **EP 4 597 654 A1**
(43) Date of publication of application: **06.08.2025**
(21) Application number: 24154795.9
(22) Date of filing: 30.01.2024
(51) Int. Cl.: H01M 10/04, H01M 10/613, H01M 10/647, H01M 10/653, H01M 10/6557, H01M 50/211, H01M 50/224, H01M 50/342, H01M 50/293, H01M 10/42, H01M 10/48

(54) **BATTERY MODULE, APPARATUS AND METHOD FOR MANUFACTURING SAID BATTERY MODULE, AND METHOD OF DISASSEMBLING SAID BATTERY MODULE**

(71) Applicant: ABB SCHWEIZ AG, 5400 Baden (CH)
(72) Inventor: SCHULER, Gabriel, 6415 Arth (CH); HE, Minglong, 4310 Rheinfelden (CH); KOLSTAD, Helge, 0586 Oslo (NO)
(74) Representative: Zimmermann & Partner Patentanwälte mbB

(57) **Abstract**

The present disclosure provides a battery module, an apparatus and method for manufacturing said battery module, and a method of disassembling said battery module. The battery module of the present disclosure is comprised of a plurality of pouch battery cells arranged within a structural enclosure, such that the battery module is folded about a plurality of module folding lines to form a folded battery module. Embodiments of the battery module provide improved mechanical strength and stiffness, improved safety, lower weight and cost, and provides further improvements to disassembly and recycling of the battery module.

## Description

### TECHNICAL FIELD

Embodiments of the present disclosure relate to battery modules, as well as methods and apparatus for the manufacture of battery modules, particularly battery modules comprising pouch cells. Further embodiments of the present disclosure relate to methods for disassembly and recycling of such battery modules.

### BACKGROUND

Battery module manufacturing in recent years has been focused on lower cost and higher material efficiency and energy efficiency in manufacturing. The integration of battery cells into battery modules in particular is time, cost and material intensive, and in the case of larger, more powerful battery modules, additional thermal challenges arise. Particularly challenging is the packaging and integration of pouch cells into battery modules, resulting in higher integration efforts which offset the benefits of pouch cells compared to prismatic or cylindrical cells.

Pouch cell formats typically exhibit improved cost efficiency, material efficiency and energy mass density than prismatic or cylindrical cells. However, these advantages are often offset by packaging challenges caused by the low mechanical stiffness of pouch cells. Further, pouch cells exhibit fewer safety features compared to prismatic or cylindrical cells, shifting additional efforts to the integration and packaging of the cell into battery modules. Particularly, despite pouch cells often exhibiting benefits in thermal management due to their reduced thickness and large surfaces available for cooling, these benefits are often lost at the module level due to the elements required for adding mechanical stiffness to the module, which are often thermally connected in an inefficient manner.

Integration approaches and manufacturing processes for battery modules of the current state of the art have further deficiencies in that multiple repeated handling steps are performed, resulting in a comparatively cost-intensive integration process. In particular, appropriate sealing of the battery module typically results in high integration efforts, with battery modules typically requiring multiple different sealing steps required.

Finally, the efficient disassembly and recycling of fully-assembled battery modules is becoming increasingly important. Battery modules of the current state of the art are typically of high complexity, resulting in higher effort for disassembly which often cannot be carried out in an automated fashion.

US patent publication no. 10,720,615 B2 describes a battery module comprising pouch cells. The battery module described includes a movement-flexible, foldable enclosure which contains the pouch cells. The enclosure is said to be flexible, pliable and foldable so that the battery module can be flexibly configurable, and constitutes a hermetic barrier to moisture. However, a battery module which is configured as such does not exhibit sufficient mechanical strength and stiffness, and may be susceptible to damage. Accordingly, such battery modules must be provided with a further enclosure, such as a battery box or outer module housing, so that the battery module can be put into service. Additional enclosures or other means to provide mechanical strength and stiffness further negate the advantageous effects of using pouch cells, resulting in a battery module which is no longer efficient in material use, weight or cost.

In view of the deficiencies in the current state of the art, improved methods for manufacturing battery modules are desired. In particular, solutions are sought for providing battery module packaging and integration which provides sufficient mechanical stiffness, thermal management and safety of the assembled battery module containing a plurality of pouch cells. Further, improvements are sought for reduced integration efforts in battery module assembly, in particular for sealing battery modules, and reduced disassembly and recycling efforts.

### SUMMARY

In view of the above challenges and problems arising in the state of the art, improved methods and apparatus for manufacturing battery modules are sought.

According to a first aspect of the present disclosure, a battery module is provided. The battery module includes a plurality of N pouch battery cells arranged in a longitudinal direction, each respective pouch battery cell having a first end at which a negative terminal is provided and a second end at which a positive terminal is provided, the first end being opposite to the second end in the longitudinal direction, wherein the negative terminal of each N pouch battery cell is connected to the positive terminal of the next N+1 pouch battery cell at a plurality of module folding lines, such that the first end of each N pouch battery cell is adjacent to the second end of the next N+1 pouch battery cell. At least one electrical isolation layer is provided on the upper and lower surfaces of the plurality of pouch battery cells, and a structural enclosure is provided on the at least one electrical isolation layer, the structural enclosure being formed from a sheet material and comprising at least one seam portion extending in the longitudinal direction, wherein the at least one seam portion joins an upper portion of the structural enclosure with a lower portion of the structural enclosure, such that the structural enclosure encloses the plurality of pouch battery cells within at least one battery cell volume. The battery module is folded about the plurality of module folding lines such that the structural enclosure which encloses the plurality of pouch battery cells forms a folded structural enclosure of layered folded portions, wherein the battery module is folded in a first direction at the module folding line where N is an even integer and folded in a second direction opposite to the first direction at the respective module folding line where N is an odd integer.

According to a second aspect of the present disclosure, an apparatus for manufacturing a battery module according to the first aspect is provided. The apparatus includes a cell transport apparatus configured for transporting a plurality of pouch battery cells aligned in the longitudinal direction, an optional signal line placement apparatus configured for placing at least one signal line, a welding apparatus configured for welding the terminals of the plurality of pouch battery cells and optionally for welding the at least one signal line, a foil layering apparatus configured for providing the at least one electrical isolation layer, wherein the layering apparatus optionally comprises a heating apparatus for heat shrinking the at least one electrical isolation layer, a sheet layering apparatus configured for providing a sheet material for forming the structural enclosure, wherein the sheet layering apparatus optionally comprises one of a roll forming apparatus or an embossing apparatus for forming the sheet material, an edge sealing apparatus configured for forming the at least one seal portion, wherein the edge sealing apparatus optionally comprises a dispenser for applying an adhesive or a sealant, and a folding apparatus configured for folding the battery module about the plurality of module folding lines to form the folded structural enclosure of layered folded portions.

According to a third aspect of the present disclosure, a method of manufacturing a battery module according to the first aspect is provided. The method includes providing a plurality of pouch battery cells aligned in the longitudinal direction, optionally placing at least one signal line, welding the terminals of the plurality of pouch battery cells and optionally the at least one signal line, providing at least one electrical isolation layer on the plurality of pouch battery cells and optionally heat-shrinking the at least one electrical isolation layer, providing a structural enclosure comprising a sheet material on the at least one electrical isolation layer, and optionally embossing or roll forming the sheet material, joining the upper portion of the structural enclosure with the lower portion of the structural enclosure to form the seam portion, and folding the battery module about the plurality of module folding lines to form the folded structural enclosure of layered folded portions.

According to a fourth aspect of the present disclosure, a method of disassembling a battery module according to the first aspect is provided. The method includes unfolding the folded structural enclosure along the module folding lines, cutting the at least one seam portion from the structural enclosure, removing the structural enclosure and the at least one electrical isolation layer, and cutting the terminals of the plurality of pouch battery cells to separate the respective pouch battery cells.

Aspects of the present disclosure provide battery modules having improved mechanical stiffness and thermal management properties while also providing improved cost efficiency and reduced integration effort. Battery modules according to aspects and embodiments of the present invention require no additional structural elements for providing the requisite mechanical stiffness, and can be manufactured using less complex methods which are suitable for automated manufacturing with reduced handling steps. Still further, battery modules according to aspects and embodiments of the present invention may be efficiently disassembled, particularly using automated methods, resulting in improved cost efficiency of recycling.

Those skilled in the art will recognise additional features and advantages upon reading the following detailed description, and upon viewing the accompanying drawings.

### BRIEF DESCRIPTION OF THE DRAWINGS

The components in the figures are not necessarily to scale, instead emphasis is being placed upon illustrating the principles of the invention. Moreover, in the figures, like reference numerals designate corresponding parts. In the drawings:
- Figs. 1a-1g: illustrate a method of manufacturing a battery module according to embodiments of the present disclosure;
- Fig. 2: illustrates a schematic isometric view of a battery module according to embodiments of the present disclosure;
- Fig. 3: illustrates a cross-section view a retaining structure of a battery module according to embodiments of the present disclosure;
- Figs. 4a-4c: illustrate detail cross-section views of a seam portion of a battery module according to embodiments of the present disclosure;
- Figs. 5a-5d: illustrate detail cross-section views of cooling passage arrangements of a battery module according to embodiments of the present disclosure;
- Fig. 6: illustrates detail views of pressure relief portions of a battery module according to embodiments of the present disclosure;
- Fig. 7: illustrates a schematic isometric view of a battery module according to embodiments of the present invention;
- Figs. 8a-8c: illustrate cross-section views of a battery module according to embodiments of the present disclosure;
- Fig. 9: illustrates an apparatus for manufacturing a battery module according to embodiments of the present disclosure.
- Fig. 10: illustrates a flow chart of a method for manufacturing a battery module according to embodiments of the present disclosure; and
- Fig. 11: illustrates a flow chart of a method for disassembling a battery module according to embodiments of the present disclosure.

### DETAILED DESCRIPTION

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

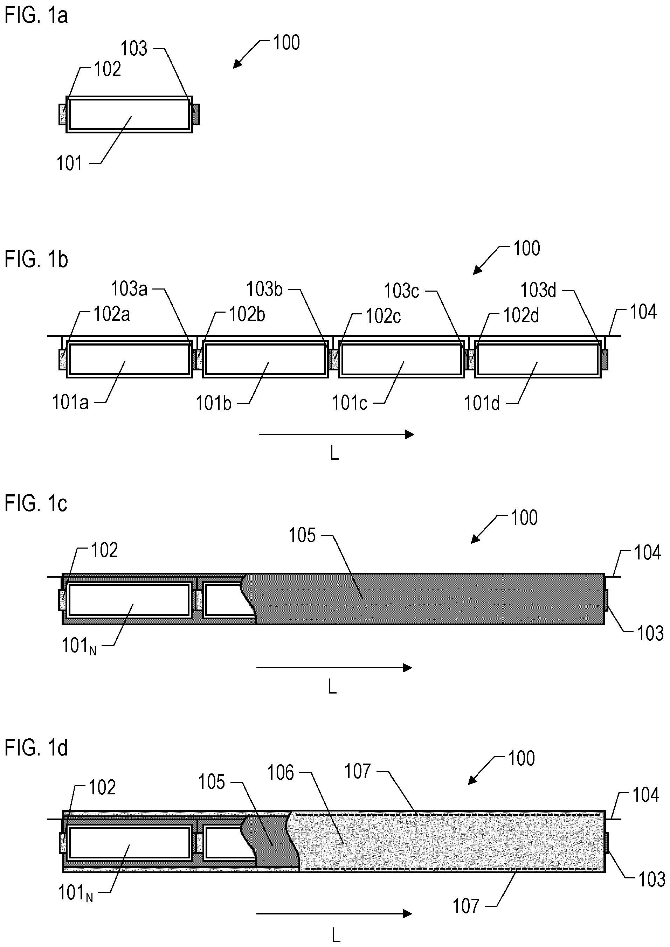

According to a first aspect of the present disclosure, a battery module will be described, along with the process steps involved in manufacturing said battery module. Reference will be made to Figs. 1a-1g, which exemplarily illustrate the manufacturing process of a battery module 100.

Referring firstly to Fig. 1a, a pouch battery cell 101 is illustrated. The battery module 100 according to aspects and embodiments of the present disclosure comprise a plurality of N pouch battery cells 101, each respective pouch battery cell 101 having a first end at which a negative terminal 102 is provided and a second end at which a positive terminal 103 is provided. Such an arrangement of the negative terminal 102 and the positive terminal 103 allows for the particular folding arrangement of pouch cells to form the battery module 100 of the present disclosure. For the folding arrangement described herein, the form factor of the pouch battery cell 101 may be freely selected, provided the pouch battery cell 101 includes terminals arranged at either end of the pouch battery cell 101. Aspect ratio, thickness and perimeter shape of the pouch battery cell 101 may be freely selected based on the application, available pouch cell form factors and packaging requirements.

The negative terminal 102 and positive terminal 103 of the pouch battery cell 101 may be any conventional battery terminal known in the current state of the art. For example, the terminals 102, 103 may be conventional tab-like terminals comprising additional conductive elements attached to electrodes within the pouch battery cell 101. Alternatively, in a tab-less design, the terminals 102, 103 may be extensions of the electrodes themselves which extend out of the pouch battery cell 101 for connecting directly thereto.

A pouch battery cell 101 in the current state of the art includes a sealed outer pouch in which the layered electrodes and electrolyte are provided. The outer pouch is typically made of a soft, flexible material which allows for battery cell expansion and gas generation during formation, aging and during general use. The absence of a stiff, structural housing gives a pouch battery cell 101 benefits in improved energy mass density and low cost. However, the soft, flexible outer pouch provides no mechanical stiffness to the pouch battery cell 101, and is required to be enclosed within a structural housing to form a usable battery module.

Referring now to Fig. 1b, a plurality of N pouch battery cells is provided. For illustration purposes, the plurality of N pouch battery cells is exemplarily shown as four pouch battery cells 101a, 101b, 101c, 101d arranged in a longitudinal direction. The terminals of the plurality of N pouch battery cells are connected in series, such that the negative terminals 102b, 102c, 102d are connected to the respective positive terminals 103a, 103b, 103c of the neighbouring pouch battery cell 101. In other words, for a plurality N of pouch battery cells 101_{N}, the negative terminal 103 of each Nth pouch battery cell 101 is connected to the positive terminal 103 of the next N+1th pouch battery cell 101. The positions at which the respective terminals are connected, along the longitudinal direction in which the pouch battery cells are arranged, correspond approximately to the positions at which the battery module will be folded. In other words, the battery module is folded at positions between neighbouring pouch battery cells. Accordingly, the respective terminals are connected at a plurality of module folding lines.

Optionally, according to an embodiment which may be combined with other embodiments described herein, the battery module 100 is further provided with at least one signal line 104 connected to the negative terminal 102 and/or positive terminal 103 of at least one of the plurality of pouch battery cells. The at least one signal line 104 is configured for carrying at least one of a voltage signal, a current signal and/or a temperature signal for a battery management system (BMS). Preferably, the at least one signal line 104 is welded to the at least one terminal of the pouch battery cells 101, more preferably by soldering. The at least one signal line 104 may alternatively be connected to at least one sensor provided within the battery module 100. For example, the at least one signal line 104 may transmit a signal from a temperature sensor, a current sensor, a voltage sensor or a pressure sensor. The at least one signal line 104 may be provided as a sheathed conductor, as a multi-core cable, or may include a flexible printed circuit (FPC) for low profile integration of the BMS signal lines.

The at least one signal line 104 is arranged such that it extends in the longitudinal direction, parallel to the arrangement of the plurality N of pouch battery cells 101. By directly laying the at least one signal line 104 within the structural enclosure of the battery module 100, which may be carried out in an automated fashion, additional integration steps after assembly of the battery module 100 are avoided, reducing integration effort and cost.

Referring now to Fig. 1c, the battery module is provided with at least one electrical isolation layer 105. The at least one electrical isolation layer 105 is provided to cover at least one surface of the plurality N of pouch battery cells 101_{N}. Preferably, the at least one electrical isolation layer 105 is arranged so as to cover an upper surface and a lower surface of the plurality N of pouch battery cells 101_{N}. However, the terms "upper surface" and "lower surface" are not limited to covering the entirety of each respective surface of the pouch battery cells 101_{N}, and may instead be arranged so as to cover a portion of the upper surface and/or the lower surface.

For example, the at least one electrical isolation layer 105 may be provided only within the regions of the terminals 102, 103 so that electrical isolation between the current-carrying components of the pouch battery cells 101_{N} and the structural enclosure is provided. Such an arrangement may be suitable in lower voltage battery module configurations where only minimal electrical isolation is required, so that weight, material usage and cost can be reduced. Further, the at least one electrical isolation layer 105 may be absent on the larger, flat surfaces of the pouch battery cells 101_{N} so that a more efficient thermal interface between the pouch battery cells 101_{N} and the structural enclosure may be achieved.

The at least one electrical isolation layer 105 may include a single layer, or may include multiple layers. For example, a single uninterrupted layer of electrical isolation 105 may be provided across the whole longitudinal length of the battery module 100, and additional layers may be provided at the regions of the terminals for additional electrical isolation.

Optionally, the at least one electrical isolation layer 105 may be subjected to a heat shrink process so that the at least one electrical isolation layer 105 is shrunk to conform to the plurality N of pouch cells 101_{N} therein. Further optionally, the at least one electrical isolation layer 105 may include a film which has been coated with at least one layer of adhesive, so that the at least one electrical isolation layer 105 is bonded to the plurality N of pouch cells 101_{N} and/or to the structural enclosure which is provided in the subsequent step.

Referring now to Fig. 1d, the battery module 100 is provided with a structural enclosure 106 which is provided on the at least one electrical isolation layer 105. The structural enclosure 106 is formed from a sheet material, and includes at least one seam portion 107 extending in the longitudinal direction, the at least one seam portion 107 joining an upper portion of the structural enclosure 106 with a lower portion of the structural enclosure 106. In other words, the seam portion 107 joins a portion of the structural enclosure 106 which is provided on a lower surface of the plurality N of pouch battery cells 101_{N} with a portion of the structural enclosure 106 which is provided on an upper surface of the plurality N of pouch battery cells 101_{N}. The respective upper and lower portions may be portions of the same sheet material, for example, if the sheet material is provided as a single sheet which wraps around the plurality N of pouch battery cells 101_{N} and is joined with a seam portion along one longitudinal edge of the battery module 100. Alternatively, as exemplarily shown in Fig. 1d, the respective upper and lower portions may be portions of two separate sheet materials, for example, which are each provided on an upper surface and a lower surface of the plurality N of pouch battery cells 101_{N} and joined with two seam portions 107 along each longitudinal edge of the battery module 100.

The structural enclosure 106 is configured to enclose the plurality N of pouch battery cells 101_{N}. Accordingly, the structural enclosure 106 defines at least one battery cell volume in which the plurality N of pouch battery cells 101_{N} are arranged. The at least one battery cell volume may include a single volume which extends along the whole length of the battery module 100 such that all of the pouch battery cells 101_{N} are within the same volume. Alternatively, the structural enclosure 106 may further comprise seam portions which extend transverse to the longitudinal direction, dividing the structural enclosure 106 into multiple battery cell volumes which enclose one or more pouch battery cells 101 within. The structural enclosure 106 is preferably configured to provide at least one hermetically sealed battery cell volume which is sealed from the outer atmosphere by the at least one seam portion 107.

In the context of the present disclosure, the term "structural enclosure" implies that the enclosure in which the plurality N of pouch battery cells 101_{N} are enclosed exhibits sufficient mechanical stiffness so as to provide the battery module 100 with mechanical strength for acting as an outer enclosure of the battery module 100. The structural enclosure 106 provides the battery. The structural enclosure 106 is substantially rigid and non-flexible, and typically only bends when subjected to plastic deformation so that the structural enclosure 106 may be folded.

Further, the structural enclosure 106 is mechanically non-pliable, and is configured to resist expansion and contain expansion and/or gas generation of the plurality N of pouch battery cells 101_{N} enclosed therein. Optional pressure relief portions, such as burst perforations, to be described below, may be provided so that any expansion and/or gas generation may be vented without further structural deformation of the structural enclosure 106.

The structural enclosure 106 is formed from a sheet material. In the context of the present disclosure, the term "sheet material" is distinct from a "foil" or a "film" in that a "sheet material" is used for forming a structural enclosure which can provide the battery module 100 with mechanical strength. By contrast, a "foil" or "film" may not have sufficient material thickness to provide sufficient mechanical strength. According to an embodiment, which may be combined with other embodiments herein, the sheet material may include a sheet metal, which allows for the sheet material to be readily seamed together to form a seam portion 107, such as by welding, soldering, crimping, hemming or the like. Further, a sheet metal material may be formed or embossed with optional features such as corrugations, swages, dimples, ribs, beads or the like for improving mechanical stiffness of the sheet material. Preferably, the sheet material may include at least one layer of sheet aluminium which allows for a lightweight, low-cost battery module 100 to be provided.

According to an embodiment, which may be combined with other embodiments described herein, the sheet material includes at least one layer of sheet aluminium having a thickness of at least 0.1 mm. Particularly, the at least one layer of sheet aluminium may have a thickness of at least 0.2 mm, more particularly at least 0.3 mm. Preferably, the thickness of the sheet aluminium used for the structural enclosure 106 is sufficient so as to provide substantial mechanical stiffness and mechanical strength to the battery module 100, for example, so that the structural enclosure 106 may form an outer enclosure of the battery module 100.

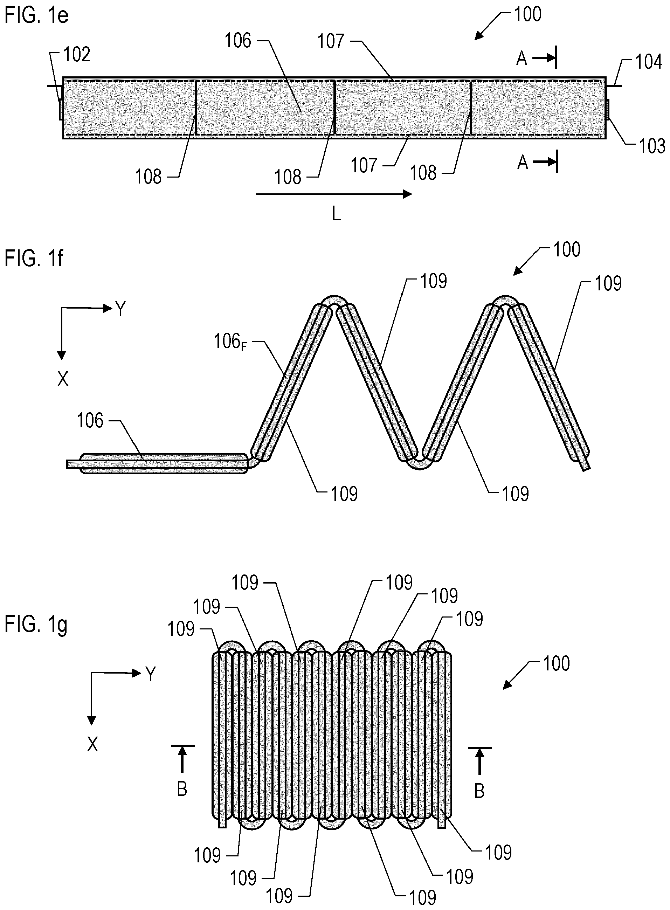

Referring now to Fig. 1e, the battery module 100 at this intermediate point of manufacturing now comprises a flat structural enclosure 106 which has been joined with at least one seam portion 107 such that the plurality N of pouch battery cells 101_{N} is enclosed within. At positions along the structural enclosure 106 in the longitudinal direction, particularly at positions which correspond to the positions of the terminals 102, 103 of the pouch battery cells 101, a plurality of module folding lines 108 are defined. It is about these module folding lines 108 which the structural enclosure 106 will be folded to form the final battery module 100.

Referring now to Figs. 1f and 1g, which show side views of the battery module 100, the battery module 100 is folded about the plurality of module folding lines 108 such that the structural enclosure 106 which encloses the plurality N of pouch battery cells 101_{N} forms a folded structural enclosure 106_{F} of layered folded portions 109. The battery module 100 is folded in alternating first and second directions, particularly in the directions perpendicular to the longitudinal direction, at the module folding lines 108. Where N is an integer corresponding to the number of pouch battery cells 101 enclosed within the folded structural housing 106_{F}, the battery module 100 is folded in a first direction where N is an even integer, and is folded in a second direction opposite to the first direction where N is an odd integer. The resulting folded structural housing 106_{F} represents, for example, a Z-folded structure or an accordion structure, which results in a stack of folded portions 109 each having a pouch battery cell 101 enclosed within, and each of the pouch battery cells 101 being electrically connected in series.

The battery module 100 exemplarily shown in Fig. 1g includes twelve layered folded potions 109. However, the present disclosure is not limited thereto and, given that the battery module 100 can be manufactured in a continuous manner, e.g. on an automated production line, the number of folded portions 109 and hence the number of pouch battery cells 101 can be freely chosen for the specific application.

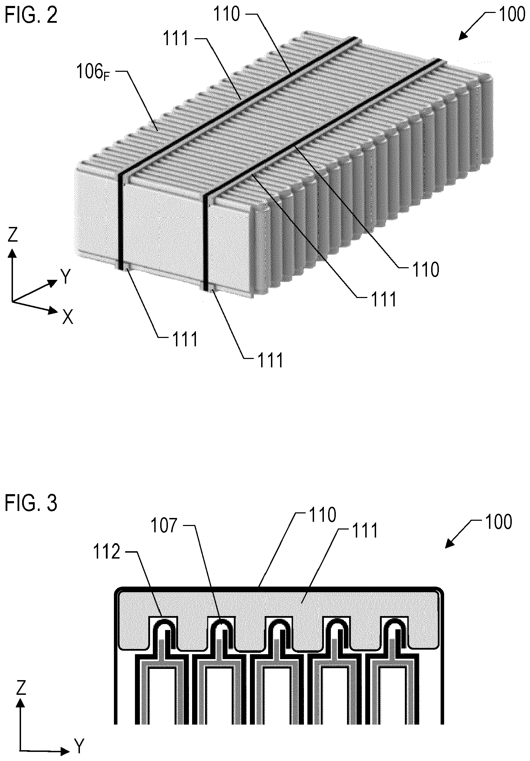

After being folded, the battery module 100 as exemplarily shown in Fig. 2 is produced. Although the folded structural enclosure 106_{F} of the battery module 100 provides sufficient mechanical stiffness and strength for the battery module 100 to be put into service after folding, the battery module 100 may be further provided with optional retaining elements to retain the folded structural enclosure 106_{F} in the folded state. As exemplarily shown, the battery module 100 may further include at least one strap 110 which is applied around the folded structural enclosure 106_{F} to retain the battery module 100. The use of a strap 110 is a low-cost and lightweight means of retaining the battery module 100, and allows for easy disassembly of the battery module 100 by simply cutting the strap 110.

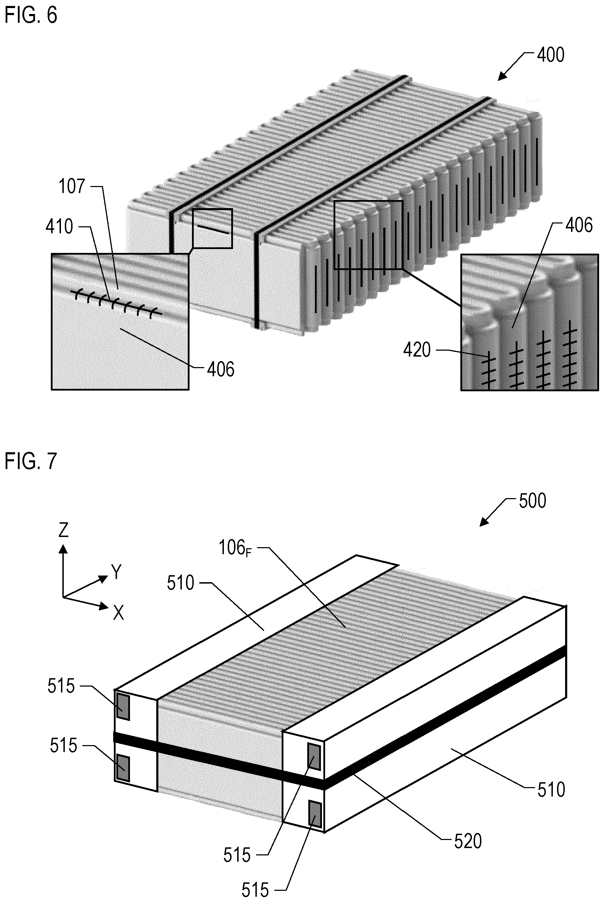

Referring further to Fig. 7, a cross-section of the battery module 100 of Fig. 6 is shown, with the cross-section arranged in the Y-Z plane. According to an embodiment, which may be combined with other embodiments described herein, the battery module 100 further includes at least one retaining structure 111 configured for retaining the folded structural enclosure 106_{F}. The at least one retaining structure 111 extends in a direction perpendicular to the seam portion 107 and comprises a plurality of recesses 112 each corresponding to the shape of the seam portion 107, such that the respective seam portions 107 of each folded portion 109 are retained within the respective one of the plurality of recesses 112. The at least one retaining structure 111 may further be retained on the battery module 100 with a strap 110. The retaining structure 112 described herein provides additional mechanical strength to the battery module 100 and provides a convenient means of securing the battery module 100 in an installation position. Further, the retaining structure 112 can be easily adapted to different sized battery modules by cutting the retaining structure 112 to length in order to suit the number of folded portions 109 of the battery module 100.

The at least one retaining structure 112 is exemplarily shown as being a component of the battery module 100. However, the present disclosure is not limited thereto, and the retaining structure 112 may be integrated into a battery tray or another installation space in which the battery module 100 is to be installed.

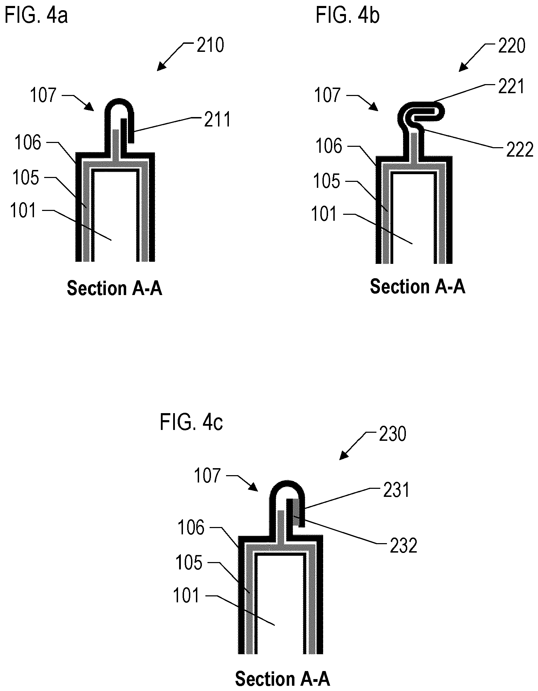

Reference will now be made to Figs. 4a-4c, which show cross-sections of exemplary seam portions according to embodiments of the present disclosure. As discussed above, the at least one seam portion 107 may be formed by sheet metal joining methods known in the state of the art. However, the preferred method of joining the upper and lower portions of the structural enclosure 106 is using a sheet metal seaming method, particularly a sheet metal hemming method.

The seam portion cross-section 210 shown in Fig. 4a illustrates a basic seam portion 107 formed by hemming. One of the upper and lower portions of the structural enclosure 106 is provided with a hemmed portion 211 which is folded over the other portion of the structural enclosure 106 to form the seam portion 107. Such a hemmed seam portion is of low complexity, cheap to manufacture and is easy to disassemble, and the hemmed portion 211 itself improves the mechanical stiffness of the structural enclosure 106.

If a stronger seam portion 107 is required, the seam portion 107 may alternatively be formed with interlocking hemmed portions. The seam portion cross-section 220 shown in Fig. 4b illustrates an interlocking hem seam portion, in which one of the upper and lower portions of the structural enclosure 106 is provided with a first hemmed portion 221, and the other one of the upper and lower portions of the structural enclosure 106 is provided with a second hemmed portion 222 such that the respective first and second hemmed portions 221, 222 interlock with each other. Although such a seam portion is more complex and more difficult to disassemble, the strength of the seam portion 107 is improved.

Optionally, the seam portion 107 may be further sealed with a sealing means. According to an embodiment, which may be combined with other embodiments described herein, the at least one seam portion is sealed by one of welding, soldering, roll bonding, or an adhesive. The seam portion cross section 630 as exemplarily shown in Fig. 4c illustrates an adhesive layer 632 provided between the upper and lower portions of the structural enclosure 106 in the area of the seam portion 107, particularly under the hemmed portion 631. The same sealing as illustrated in the figure may also be achieved by roll bonding, welding or soldering the hemmed portion 632 so that the seam portion 107 is sealed.

The sealing may be performed alone so as to form the seam portion 107, or may be performed in combination with another seaming method such as the above-described hemming process to form a seam portion 107 which is hermetically sealed. By sealing the seam portion 107, the battery cell volume provided within the structural enclosure 106 is sealed off and separated from the atmosphere, which prevents gases generated by the battery cells during normal operation and aging from being vented to the atmosphere. Further, the structural enclosure 106 is made weather-resistant so that battery module 100 requires no additional enclosure for operation in inclement conditions.

In small battery modules with a comparatively low power, the structural enclosure 106 of the battery module 100 according to the present disclosure may be sufficient for passively dissipating heat generated by the pouch battery cells 101 within. However, in larger battery modules with comparatively high power, active cooling solutions may be integrated into the battery pack 100 of the present disclosure.

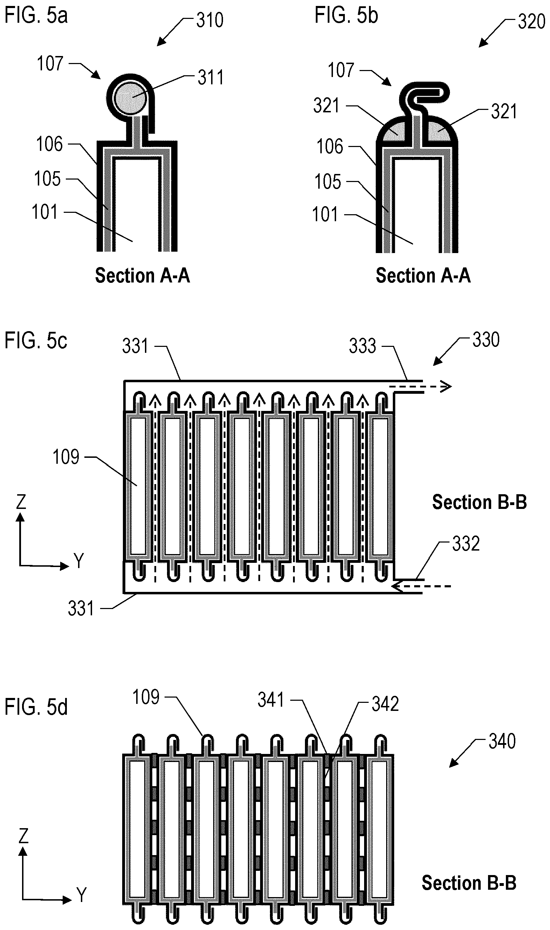

Reference will be made to Figs. 5a-5b, which show cross-sections of a seam portion 107, and Figs. 5c-5d, which show cross-sections of a folded battery module 100. In the illustrated examples, at least one cooling passage is provided within the battery module 100 for active cooling. According to an embodiment, which may be combined with other embodiments described herein, the battery module 100 may further include at least one cooling passage through which a cooling medium flows, wherein the at least one cooling passage is arranged on the structural enclosure 106, arranged within the structural enclosure 106, or integrally formed into the structural enclosure 106.

In the context of the present disclosure, the term "cooling medium" refers to the medium which flows through the respective cooling passages to transfer heat from the structural enclosure 106 to the cooling medium. The cooling medium may be a gas, such as air, or a liquid, such as water or glycol. Further, the battery module 100 may be provided with an active cooling system comprising a pump for circulating the cooling medium, a radiator or heat exchanger for discarding thermal energy and pipes or hoses for connecting therebetween. The active cooling system may be integrated into the battery module 100, or may be provided as an external system.

Referring to Fig. 5a, which shows a cross-section of a seam portion 107 through section A-A, the battery module 100 is provided with at least one cooling passage 311 which is provided within an open hem of the seam portion 107. The at least one cooling passage 311 is shown as a separate tube which is inserted into the seam portion 107 during the hemming process, such that the separate tube and the cooling medium flowing therein allows thermal transfer from the structural enclosure 106 into the cooling medium. Such an arrangement may be a suitable cooling solution in cases where the seam portion 107, particularly the hem portion, is not provided with a sealing means.

Alternatively, the cooling passage may be integrally formed within the seam portion by forming the structural enclosure 106 into passage walls which define a cooling passage therein. Referring to Fig. 5b, which shows the exemplarily seam portion cross-section 320, at least one cooling passage 321 is formed by the structural enclosure 106, particularly in the seam portion 107. According to an embodiment, which may be combined with other embodiments described herein, the at least one cooling passage 321 extends in the longitudinal direction L and is formed by the at least one seam portion 107, wherein the at least one seam portion 107 is sealed using roll bonding or an adhesive. By forming the cooling passage 321 in this manner, it is not necessary to provide a separate tube which is to be formed into the seam portion 107, and thermal transfer directly from the structural enclosure 106 to the cooling medium is possible, improving efficiency of the cooling.

Further, the at least one cooling passage may be provided between the folded portions 109 of the folded structural enclosure 106_{F} instead of, or in addition to, cooling passages within the seam portion 107. Referring to Fig. 5c, which shows a cross-section of a battery module 100 through section B-B, the folded structural enclosure 106_{F} may be folded in such a way as to leave a gap between neighbouring folded portions 109 so that a cooling passage may be provided therebetween. The battery module 100 may then be provided with cooling manifolds 331 which are configured to supply the cooling medium to the cooling passages between the neighbouring folded portions 109. The cooling manifolds 331 may define a cooling inlet 332 and a cooling outlet 333, such that the cooling medium is allowed to circulate through the cooling manifolds 331 and between the folded portions 109. Such an arrangement allows for a large volume of cooling medium to flow throughout the battery module 100, allowing for high thermal loads to be managed.

Alternatively, the battery module 100 may be provided with additional elements between the folded portions 109 which may be used to space neighbouring folded portions 109 apart and to define cooling passages therebetween. Referring to Fig. 5d, which shows a cross-section of a battery module 100 through section B-B, the cooling passages 342 are formed with additional wall passage wall elements 341. According to an embodiment, which may be combined with other embodiments described herein, a surface of the structural enclosure 106 is provided with passage wall elements 341 between the folded portions 109, forming the at least one cooling passage 342 between the passage wall elements 341 and the surface of the folded structural enclosure 106_{F}. For example, the passage wall elements 341 may be provided as a spacer frame which is inserted between neighbouring folded portions 109 during folding of the battery module so as to define a plurality of cooling passages 342. Alternatively, the passage wall elements 341 may be provided as a patterned layer of sealant or adhesive which is applied to the surface of the structural enclosure 106 prior to folding whereby, after folding the battery module 100, the patterned layer forms passage wall elements 341 and sealed cooling passages 341.

As discussed previously, the structural enclosure 106 of the battery module 100 according to the present disclosure is a structural element which provides mechanical stiffness to the battery module 100. Accordingly, the structural enclosure 106 may be configured for resisting swelling or pressure build-up within the battery cell volume within. In the case of excessive pressure caused by cell swelling or by gas generation, the battery module 100 of the present disclosure may be further provided with pressure relief portions which may be configured to vent the excessive pressure in extreme circumstances.

Referring now to Fig. 6, which shows detailed views of portions of a battery module 400, the structural enclosure 406 of the battery module 400 may be provided with pressure relief portions 410, 420. According to an embodiment, which may be combined with other embodiments described herein, the structural enclosure 106 includes at least one pressure relief portion 410, 420 configured to perforate when a pressure in the at least one battery cell volume within the structural enclosure 106 exceeds a predetermined threshold such that the at least one battery cell volume is vented. The pressure relief portions may include, for example a portion of the structural enclosure 106 which has been thinned or partially cut so that a weak point is provided in the structural enclosure 106 and, when subjected to excessive pressure, will perforate to allow venting from the battery cell volume. As exemplarily shown in Fig. 6, the at least one pressure relief portion 410 may be provided in an area near the seam portion 107 so that, when perforated, the at least one pressure relief portion 410 opens to vent the battery cell volume to the atmosphere in an upwards direction and away from the battery module 100. Alternatively, the at least one pressure relief portion 420 may be provided in an area of the module folding lines so that, when perforated, the at least one pressure relief portion 420 opens to vent the battery cell volume to the atmosphere at the side of the battery module 100.

Referring to Fig. 7, a battery module 500 is provided with additional elements for capturing gases vented from within the battery cell volume through the at least one pressure relief portions. According to an embodiment, which may be combined with other embodiments described herein, the battery module 500 further includes at least one side cap 510 provided on at least one side of the folder structural enclosure 106_{F} at the module fold lines 108. Therein, at least one pressure relief portion 420, as illustrated in Fig. 6, is provided along the module fold lines 108 such that, when the at least one pressure relief portion 420 is perforated, the at least one battery cell volume is vented into the at least one side cap 510. The at least one side cap 510 may optionally include at least one side cap vent 515 which may be used to controllably vent gases which are vented from the battery cell volume in the event of a perforation of a pressure relief portion 420. For example, the at least one side cap vent 515 may be further provided with a vent channel (not shown) to exhaust the vented gas outside of the battery module 500.

Optionally, the at least one side cap 510 may be configured for retaining the folded structural enclosure 106_{F} in a similar manner as with the retaining structure described previously. Further, the at least one side cap 510 may be provided with at least one strap 520 which holds the at least one side cap 510 onto the battery module 500, and retains the battery module 500.

Optionally, the at least one pressure relief portion may be positioned within the structural enclosure 106 between the battery cell volume and a cooling passage. For example, the at least one pressure relief portion may be provided in a portion of the structural enclosure 106 which forms a wall between the battery cell volume and a cooling passage such that, in the event that the at least one pressure relief portion is perforated, the cooling medium flowing in the cooling passage can enter into the battery cell volume. Such an arrangement can allow for improved safety by slowing or inhibiting thermal runaway in the case of a failing battery cell, such as a battery cell which is undergoing a thermal failure, so that the cooling medium which is normally used for cooling the battery module 100 in normal operation can flood the battery cell volume and mitigate the thermal failure.

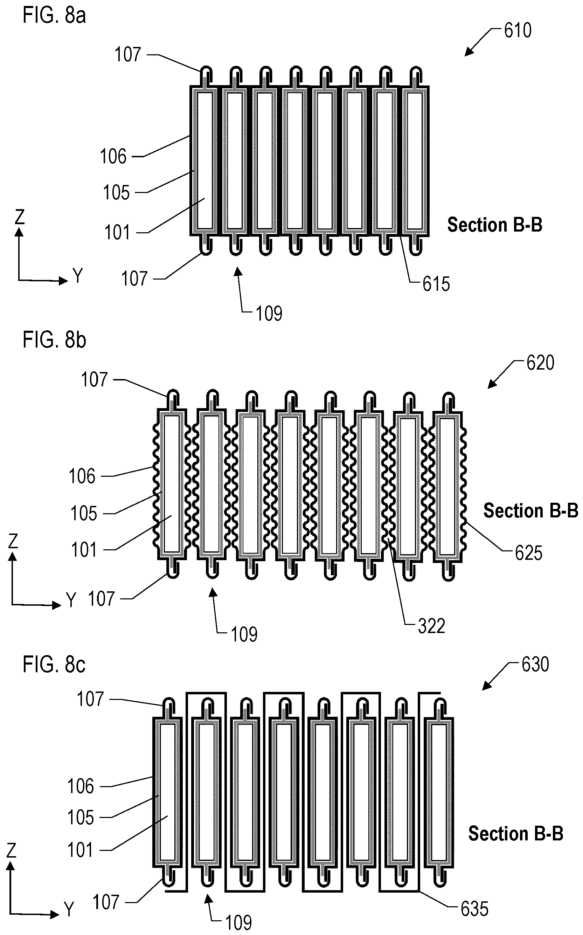

Reference will now be made to Figs. 8a-8c, which show cross-sectional views of the battery module 100 according to aspects and embodiments of the present disclosure. The cross-sectional views are shown through section B-B, in the Y-Z plane. The battery module cross sections 610, 620, 630 relate to features of the structural enclosure 106 and the layering of the folded portions 109 which provide improvements to stiffness and thermal performance. Each battery module cross-section 610, 620, 630 shows eight folded portions 109, however any number of folded portions 109 may be present.

Battery module cross-section 610, shown in Fig. 8a, illustrates that the surfaces of the structural enclosure 106 of each folded portion 109 may be flat, and each of the folded portions 109 makes direct contact 615 with the neighbouring folded portion 109. The direct contact 615 between neighbouring folded portions 109 allows for thermal transfer through the structural enclosure 106 and between folded portions 109, so that the thermal energy in the battery module 100 may be distributed across a larger area of the battery module 100. Optionally, the direct contact 615 may further include a thermal interface, such as a silicone-based thermal pad or a thermal compound, which enhances the thermal transfer between folded portions 109. Additionally, by making each surface of the structural enclosure 106 completely flat and making direct contact 615 therebetween, the resulting battery module 100 can be made more compact in the Y direction. Such an arrangement may be suitable for a lower-power or smaller battery module 100 which generates a lower thermal load.

Alternatively, instead of flat surfaces, the structural enclosure 106 may be provided with formed features which improve the mechanical stiffness, as exemplarily shown in the battery module cross section 620 of Fig. 8b. According to an embodiment, which may be combined with other embodiments described herein, the structural enclosure 106 includes stiffening elements 625 formed in the structural enclosure 106. Preferably, the stiffening elements 625 are corrugations formed or embossed into the structural enclosure 106, such that the corrugations extend in either the X direction (normal to cross-section B-B) or alternatively in the Z direction. However, the present disclosure is not limited thereto, and instead of corrugations the structural enclosure 106 may be provided with ribs, swages, dimples or other features which improve the stiffness of the structural enclosure 106.

Further, the stiffening elements 625 which may be added to the structural enclosure 106 may be formed in such a way as to create cooling passages between the folded portions 109, e.g. by forming passage walls as described above with respect to Fig. 5d. According to an embodiment, which may be combined with other embodiments described herein, the stiffening elements 625 form the passage wall elements between the folded portions 109, forming the at least one cooling passage 342 between the passage wall elements and the surface of the folded structural enclosure 106_{F}. The stiffening elements 625 may be configured to seal up against each other, between neighbouring folded portions 109, so that the cooling passage 342 is formed. Alternatively, the folded portions 109 may be folded such that a gap is maintained therebetween, providing a cooling passage between the two folded portions similar to Fig. 5c described above, and the stiffening portions 625 provide additional surface area for more effective thermal transfer to the cooling medium. Optionally, the abutting portions of the stiffening elements 625 may be provided with a sealant or adhesive so that the respective stiffening elements 625 are bonded together, forming a cooling passage 342.

Optionally, during the folding process when the structural enclosure 106 is folded into the folded structural enclosure 106_{F}, additional elements may be layered between the folded portions 109. As exemplarily shown in the battery module cross-section 630 shown in Fig. 8c, the battery module 100 may further be provided with a thermal barrier layer 635 between one or more pairs of neighbouring folded portions 109. In larger, high-power battery modules, the mitigation of thermal runaway is an important safety aspect, and thermal barrier layers 635 may be used to prevent a thermal event in one folded portion 109 to spread to other folded portions 109.

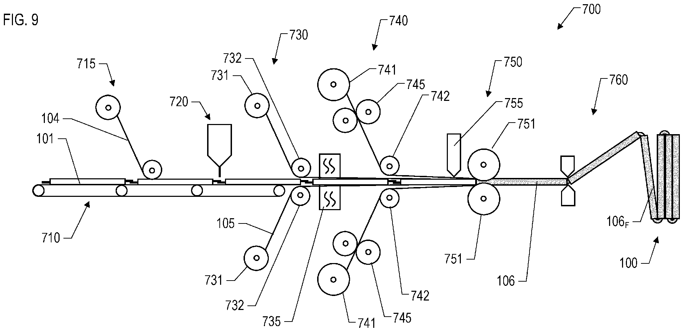

Referring now to Fig. 9, an apparatus 700 for manufacturing a battery module 100 according to the first aspect is provided. The apparatus 700 includes a cell transport apparatus 710 configured for transporting a plurality of pouch battery cells 101 aligned in the longitudinal direction, and an optional signal line placement apparatus 715 configured for placing at least one signal line 104. Further included is a welding apparatus 720 configured for welding the terminals 102, 103 of the plurality of pouch battery cells 101 and optionally for welding the at least one signal line 104. Further included is a foil layering apparatus 730 configured for providing the at least one electrical isolation layer 105, wherein the layering apparatus 730 optionally comprises a heating apparatus 735 for heat shrinking the at least one electrical isolation layer 105, and a sheet layering apparatus 740 configured for providing a sheet material for forming the structural enclosure 106, wherein the sheet layering apparatus 740 optionally comprises one of a roll forming apparatus 745 or an embossing apparatus for forming the sheet material. An edge sealing apparatus 750 is further provided for forming the at least one seal portion 107, wherein the edge sealing apparatus 750 optionally comprises a dispenser 755 for applying an adhesive or a sealant. Finally, a folding apparatus 760 is provided, the folding apparatus 760 being configured for folding the battery module 100 about the plurality of module folding lines 108 to form the folded structural enclosure 106_{F} of layered folded portions 109.

The cell transport apparatus 710 is provided for transporting the pouch battery cells 101 in a transport direction, particularly the longitudinal direction L of the battery module 100, and for providing the individual pouch battery cells 101 and arranging them to be joined. The cell transport apparatus 710 is exemplarily shown as including a conveyor on which the pouch battery cells 101 are laid and transported. However, the present disclosure is not limited thereto, and the cell transport apparatus 710 may include any suitable transport apparatus known in the current state of the art. Optionally, the apparatus 700 includes a signal line placement apparatus 715 configured for placing at least one signal line 104. The at least one signal line 104 is laid in the transport direction, particularly corresponding to the longitudinal direction L of the battery module 100, and may be laid from one or more reels of signal cable.

A welding apparatus 720 is further provided to connect the terminals 102, 103 of the plurality of pouch battery cells 101 together. Preferably, the welding apparatus includes an automated soldering apparatus which connects the respective terminals 102, 103 using a soldering apparatus, a resistive welding apparatus which connects the respective terminals 102, 103 by resistive spot/line welding, or a laser welding apparatus. Any apparatus configured for welding terminals 102, 103 of a pouch battery cell 101 may be suitable. Further, the welding apparatus 720 may be optionally configured for connecting the at least one signal line 104, laid onto or next to the plurality of pouch battery cells 101 in the longitudinal direction L, to one or more terminals 102, 103 of the pouch battery cells 101.

After the plurality of pouch battery cells 101 are electrically connected to each other and optionally to the at least one signal line 104, a foil layering apparatus 730 is provided to lay at least one electrical isolation layer 105, preferably in the form of a sheet or foil of insulating material. As exemplarily shown in Fig. 9, the foil layering apparatus 730 includes two supply rolls 731 for supplying the electrical insulating material 105 and a pair of placement rollers 732 for laying the electrical insulating material 105 onto the assembly. Optionally, the foil layering apparatus 730 may include a heating apparatus 735 for heat shrinking the at least one electrical isolation layer 105 so that the at least one electrical isolation layer 105 conforms to the shape of the pouch battery cells 101. Further, the foil layering apparatus 730 may include a sealing apparatus (not shown) configured for sealing the at least one electrical isolation layer 105, for example, a heat seaming or welding apparatus.

After the at least one electrical isolation layer 105 is laid by the foil layering apparatus 730, a sheet layering apparatus 740 is provided for providing the sheet material for forming the structural enclosure 106. The sheet layering apparatus 740 may include, for example, at least one sheet material supply roll 741 for supplying the sheet material, and one or more placement rollers 742 for laying the sheet material onto the assembly. Optionally, the sheet layering apparatus 740 may further include an additional apparatus for embossing or roll forming the sheet material as the sheet material is laid by the sheet layering apparatus 740. The apparatus as shown in Fig. 9 exemplarily shows a pair of forming rollers 745 for roll forming the sheet material. However, the present disclosure is not limited thereto, and the sheet layering apparatus 740 may include any sheet metal forming apparatus such as dies, rollers, presses or the like for forming or embossing features into the sheet material, and may further include an engraving or cutting apparatus for providing partial cuts or thinned portions in the sheet material as pressure relief portions. Particularly, the apparatus for embossing or roll forming of the sheet material is configured for forming stiffening features and/or pressure relief portions or perforations into the sheet material.

The apparatus 700 further includes an edge sealing apparatus 750 configured for forming the seam portion 107 which joins the upper and lower portions of the structural enclosure 106. The edge sealing apparatus 750 may be any known apparatus for joining two portions of a sheet material, particularly a sheet metal material, and may include an apparatus configured for joining the upper and lower portions by a sheet metal deformation process, a welding process or an adhesive process. Preferably, the edge sealing apparatus 750 is configured for at least one sheet metal deformation process, and may include a hemming process wherein one or more hems are formed along respective edges of the upper and/or lower portion, interlocking hems are formed between the upper and/or lower portion, or wherein the upper and lower portions are crimped together or roll bonded together. As exemplarily shown, the edge sealing apparatus 750 may include a pair of hemming rollers 751 which form one or more hem portions for the seam portion 107. Alternatively, a welding process may be used wherein the respective edges of the upper and lower portions are welded together to form the seam portion 107, for example, using a seam welder or a spot welder. As a further alternative, the edge sealing apparatus 750 may be configured to join the upper and lower portions with an adhesive. Further, combinations of any of the above processes may be implemented, such as a hemming process with the addition of spot welding.

Optionally, the edge sealing apparatus 750 may further include a dispenser 755 for applying a sealant or an adhesive to the upper and/or lower portions, particularly within the at least one seam portion 107. The dispenser 755 may, for example, apply a bead of sealant in the longitudinal direction before the edge sealing apparatus forms a hem at the at least one seam portion 107, so that the hem is hermetically sealed. Alternatively, the dispenser 755 may apply an adhesive along the at least one seam portions 107 so that the hem is bonded, resulting in a stronger seam portion 107
Finally, the apparatus 700 includes a folding apparatus 760 configured for folding the battery module 100 about the plurality of module folding lines 108 to form the folded structural enclosure 106_{F} of layered folded portions 109. The folding apparatus 760 may further include bending tooling, such as a number of bending dies or form tools, for bending the structural enclosure 106 without crushing or crimping the at least one seam portion, particularly in the case where the at least one seam portion 107 includes a signal line or a cooling passage integrated within.

Optionally, the folding apparatus 760 may further be provided with an apparatus for providing one or more materials or elements between the layers of folded portions 109. For example, the folding apparatus 760 may further include a foil layering apparatus for providing a thermal barrier layer between the layers of folded portions 109. Alternatively, the folding apparatus 760 may be provided with a dispenser for applying an adhesive between the layers of folded portions 109, or for providing a distance element between the layers of folded portions for forming one or more cooling passages.

Optionally, the apparatus 700 may further include a finishing portion which performs one or more finishing processes to the folded battery module 100. Particularly, the apparatus 700 may further include a strapping or binding apparatus configured for securing one or more straps around the battery module 100. The strapping or binding apparatus may further be configured for fitting at least one retaining structure and/or at least one side cap to the battery module 100 prior to the straps being secured. Alternatively, the one or more finishing processes may include the assembly of auxiliary elements such as a cooling system for attaching to one or more cooling passages within the battery module 100, or a battery management system (BMS) for attaching to the at least one signal line 104.

Further, the apparatus 700 may include an apparatus controller configured for controlling the various manufacturing processes carried out by the apparatus 700. The apparatus controller may be connected to a plurality of actuators which are configured to operate or adjust the apparatus 700 based on a control algorithm. Further, the apparatus controller may be provided with a number of sensors configured for acquiring various process parameters, and may be configured for closed-loop control of the apparatus 700 according to a control model.

The apparatus controller may be a microprocessor, a programmable logic controller (PLC), or a digital signal processor (DSP). Particularly, the apparatus controller may include a processing element, at least one input and at least one output, such that a data processing operation is performed on the at least one input and output to the at least one output. The apparatus controller may further include at least one storage means, which may include random access memory (RAM), read-only memory (ROM) and external data storage means such as hard disks, flash storage or network-attached storage, and may further include a network interface for connecting the apparatus controller to a data network, in particular a global data network.

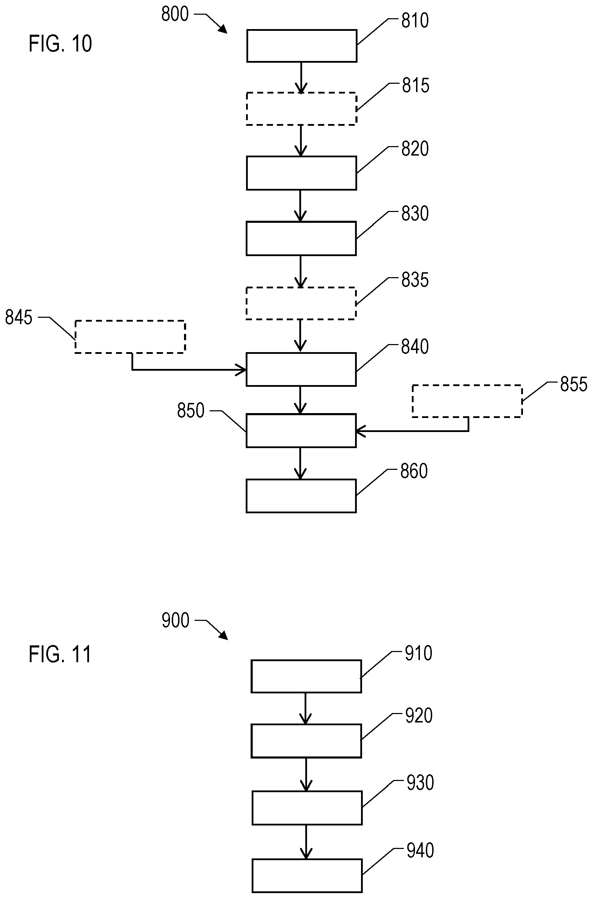

Referring now to Fig. 10, according to a third aspect of the present disclosure, a method 800 of manufacturing a battery module 100 according to the first aspect is provided. The method 800 includes providing 810 a plurality of pouch battery cells 101 aligned in the longitudinal direction L, optionally placing 815 at least one signal line 104, welding 820 the terminals 102, 103 of the plurality of pouch battery cells 101 and optionally the at least one signal line 104, providing 830 at least one electrical isolation layer 105 on the plurality of pouch battery cells 101 and optionally heat-shrinking 835 the at least one electrical isolation layer 105, providing 840 a structural enclosure 106 comprising a sheet material on the at least one electrical isolation layer 105, and optionally embossing or roll forming 845 the sheet material, joining 850 the upper portion of the structural enclosure 106 with the lower portion of the structural enclosure 106 to form the seam portion 107, and folding the battery module 100 about the plurality of module folding lines 108 to form the folded structural enclosure 106_{F} of layered folded portions 109.

Optionally, the method 800 may further include providing 855 an adhesive to the seam portion 107 after providing 840 the sheet material and during the joining 850 of the upper portion of the structural enclosure 106 with the lower portion of the structural enclosure 106, such that the adhesive seals the seam portion 107. Further optionally, the method 800 may further include, during the folding step 860, providing at least one of a thermal barrier layer 631 and a cooling channel distance element 341 between the layered folded portions 109.

The method 800 of manufacturing according to the third aspect is substantially the same as the manufacturing steps described above with reference to Figs. 1a-1g. Accordingly, all features, optional features, technical effects and advantages described above for the battery module of the first aspect are equally applicable to the method 800 of the third aspect.

The battery module 100 according to the aspects and embodiments described herein provide further advantages with respect to disassembly and recycling of the battery modules and of the battery cells assembled therein. In particular, the folded structural enclosure 106_{F} of the battery module 100 can be easily unfolded, the at least one seam portion 107 can be easily opened, and the pouch battery cells 101 within can be easily extracted from the battery module 100 for recycling. Furthermore, each of these disassembly steps can be carried out in a substantially automated fashion, reducing the cost and effort of disassembly making recycling of the battery module 100 cost-effective.

According to a fourth aspect of the present disclosure, a method 900 of disassembling a battery module 100 according to the first aspect is provided. The method 900 includes unfolding 910 the folded structural enclosure 106_{F} along the module folding lines 108, cutting 920 the at least one seam portion 107 from the structural enclosure 106, removing 930 the structural enclosure 106 and the at least one electrical isolation layer 105, and cutting 940 the terminals 102, 103 of the plurality of pouch battery cells 101 to separate the respective pouch battery cells 101.

The unfolding of the folded structural enclosure 106_{F} may be carried out manually or in an automated process by simply pulling the battery module 100 so that the respective folded portions 109 of the folded structural enclosure 106_{F} are unfolded. Once unfolded, the flat structural enclosure 106 may optionally be rolled to further flatten the structure. The at least one seam portion 107 is then cut from the structural enclosure 106. Depending on the position of the cutting line, the cutting may further remove the at least one signal line 104, which may be arranged within the at least one seam portion 107. With at least one of the seam portions 107 removed, the structural enclosure 106 and the electrical isolation layers 105 may be peeled back from the plurality of pouch battery cells 101 within, and the terminals 102, 103 joining each of the pouch battery cells 101 may be cut to separate the pouch battery cells 101 so that the pouch battery cells 101 may be recycled in a low-effort and low-cost manner.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned.

Spatially relative terms such as "under", "below", "lower", "over", "upper" and the like are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present invention is not limited by the foregoing description, nor is it limited by the accompanying drawings. Instead, the present invention is limited only by the following claims and their legal equivalents.

**Reference numbers**

| | | | |
|---|---|---|---|
| 100 | Battery module | 340 | Cooling cross section |
| 101, 101a-d | Pouch battery cell | 341 | Passage wall elements |
| 101_{N} | Plurality of N pouch battery cells | 342 | Cooling passage |
| | | 400 | Battery module with pressure relief |
| 102, 102a-d | Negative terminal | | |
| 103, 103a-d | Positive terminal | 406 | Structural enclosure |
| 104 | Signal line | 410, 420 | Pressure relief portion |
| 105 | Electrical isolation layer | 500 | Battery module with side caps |
| 106 | Structural enclosure | 510 | Side cap |
| 106_{F} | Folded structural enclosure | 515 | Side cap vent |
| 107 | Seam portion | 520 | Strap |
| 108 | Module folding line | 610 | Battery module cross section |
| 109 | Folded portion | 615 | Direct contact |
| 110 | Strap | 620 | Battery module cross section |
| 111 | Retaining structure | 625 | Corrugation |
| 112 | Recess | 630 | Battery module cross section |
| 210 | Seam portion cross-section | 635 | Thermal barrier layer |
| 211 | Hem portion | 700 | Apparatus for manufacturing a battery module |
| 220 | Seam portion cross-section | | |
| 221 | First hem portion | 710 | Cell transport apparatus |
| 222 | Second hem portion | 715 | Signal line placement apparatus |
| 230 | Seam portion cross-section | | |
| 231 | Hem portion | 720 | Welding apparatus |
| 232 | Adhesive layer | 730 | Foil layering apparatus |
| 310 | Cooling cross section | 731 | Foil supply roll |
| 311 | Cooling passage | 732 | Foil placement roller |
| 320 | Cooling cross section | 735 | Heating apparatus |
| 321 | Roll-bonded integrated cooling passage | 740 | Sheet layering apparatus |
| | | 741 | Sheet material supply roll |
| 330 | Cooling cross section | 742 | Sheet material placement roller |
| 331 | Cooling manifold | | |
| 332 | Cooling inlet | 745 | Embossing or roll forming apparatus |
| 333 | Cooling outlet | | |
| 750 | Edge sealing apparatus | | |
| 751 | Hemming rollers | | |
| 755 | Adhesive dispenser | | |
| 760 | Folding apparatus | | |
| 800 | Method of manufacturing a battery module | | |
| 810 | Providing pouch battery cells | | |
| 815 | Placing at least one signal line | | |
| 820 | Welding | | |
| 830 | Providing the electrical isolation layer | | |
| 835 | Heatshrinking | | |
| 840 | Providing the sheet material | | |
| 845 | Embossing or roll forming the sheet material | | |
| 850 | Joining to form the seam portion | | |
| 855 | Providing an adhesive to the seam portion | | |
| 860 | Folding the battery module | | |
| 900 | Method for disassembling a battery module | | |
| 910 | Unfolding the folded structural enclosure | | |
| 920 | Cutting the at least one seam portion | | |
| 930 | Removing the enclosure and electrical isolation layer | | |
| 940 | Cutting the terminals | | |

## Claims

1. A battery module, comprising:
a plurality of N pouch battery cells arranged in a longitudinal direction, each respective pouch battery cell having a first end at which a negative terminal is provided and a second end at which a positive terminal is provided, the first end being opposite to the second end in the longitudinal direction, wherein the negative terminal of each N pouch battery cell is connected to the positive terminal of the next N+1 pouch battery cell at a plurality of module folding lines, such that the first end of each N pouch battery cell is adjacent to the second end of the next N+1 pouch battery cell;
at least one electrical isolation layer provided on the upper and lower surfaces of the plurality of pouch battery cells; and
a structural enclosure provided on the at least one electrical isolation layer, the structural enclosure being formed from a sheet material and comprising at least one seam portion extending in the longitudinal direction, wherein the at least one seam portion joins an upper portion of the structural enclosure with a lower portion of the structural enclosure, such that the structural enclosure encloses the plurality of pouch battery cells within at least one battery cell volume,
wherein the battery module is folded about the plurality of module folding lines such that the structural enclosure which encloses the plurality of pouch battery cells forms a folded structural enclosure of layered folded portions, wherein the battery module is folded in a first direction at the module folding line where N is an even integer and folded in a second direction opposite to the first direction at the respective module folding line where N is an odd integer.

2. The battery module of claim 1, wherein the sheet material comprises a sheet metal, preferably at least one layer of sheet aluminium, more preferably wherein the at least one layer of sheet aluminium has a sheet thickness of at least 0.1 mm.

3. The battery module of any one of claims 1 and 2, wherein the at least one seam portion is sealed by one of welding, soldering, roll bonding, or an adhesive.

4. The battery module according to any one of claims 1 to 3, further comprising at least one signal line connected to the negative terminal and/or positive terminal of at least one of the plurality of pouch battery cells, the at least one signal line being configured for carrying at least one of a voltage signal, a current signal and/or a temperature signal for a battery management system (BMS), wherein the at least one signal line is provided within the structural enclosure extending in the longitudinal direction, and optionally wherein the at least one signal line is provided within the at least one seam portion.

5. The battery module according to any one of claims 1 to 4, further comprising at least one cooling passage through which a cooling medium flows, wherein the at least one cooling passage is arranged on the structural enclosure, arranged within the structural enclosure, or integrally formed into the structural enclosure.

6. The battery module according to any one of claims 1 to 5, wherein the at least one cooling passage extends in the longitudinal direction and is formed by the at least one seam portion, wherein the at least one seam portion is sealed using one of welding, soldering, roll bonding or an adhesive.

7. The battery module according to claim 5, wherein a surface of the structural enclosure is provided with passage wall elements between the folded portions, forming the at least one cooling passage between the passage wall elements and the surface of the folded structural enclosure.

8. The battery module according to any one of claims 1 to 7, wherein the structural enclosure comprises at least one pressure relief portion configured to perforate when a pressure in the at least one battery cell volume within the structural enclosure exceeds a predetermined threshold such that the at least one battery cell volume is vented.

9. The battery module according to claim 8, further comprising at least one side cap provided on at least one side of the folded structural enclosure covering the folded structural enclosure at the module fold lines, wherein the at least one pressure relief portion is arranged along the plurality of module fold lines such that, when the at least one pressure relief portion is perforated, the at least one battery cell volume is vented into the at least one side cap.

10. The battery module according to any one of claims 1 to 9, wherein the structural enclosure comprises stiffening elements formed in the structural enclosure, preferably stiffening corrugations.

11. The battery module according to claims 7 and 10, wherein the stiffening elements form the passage wall elements such that the at least one cooling passage is formed by the stiffening elements of the folded structural enclosure.

12. The battery module according to any one of claims 1 to 11, further comprising at least one retaining structure configured for retaining the folded structural enclosure, wherein the at least one retaining structure extends in a direction perpendicular to the seam portion and comprises a plurality of recesses each corresponding to the shape of the seam portion, such that the respective seam portions of each folded portion are retained within the respective one of the plurality of recesses.

13. Apparatus for manufacturing a battery module according to any one of claims 1 to 12, the apparatus comprising:
a cell transport apparatus configured for transporting a plurality of pouch battery cells aligned in the longitudinal direction;
an optional signal line placement apparatus configured for placing at least one signal line;
a welding apparatus configured for welding the terminals of the plurality of pouch battery cells and optionally for welding the at least one signal line;
a foil layering apparatus configured for providing the at least one electrical isolation layer, wherein the layering apparatus optionally comprises a heating apparatus for heat shrinking the at least one electrical isolation layer;
a sheet layering apparatus configured for providing a sheet material for forming the structural enclosure, wherein the sheet layering apparatus optionally comprises one of a roll forming apparatus or an embossing apparatus for forming the sheet material;
an edge sealing apparatus configured for forming the at least one seal portion, wherein the edge sealing apparatus optionally comprises a dispenser for applying an adhesive or a sealant; and
a folding apparatus configured for folding the battery module about the plurality of module folding lines to form the folded structural enclosure of layered folded portions.

14. Method of manufacturing a battery module according to any one of claims 1 to 12, the method comprising:
providing a plurality of pouch battery cells aligned in the longitudinal direction;
optionally placing at least one signal line;
welding the terminals of the plurality of pouch battery cells and optionally the at least one signal line;
providing at least one electrical isolation layer on the plurality of pouch battery cells and optionally heat-shrinking the at least one electrical isolation layer;
providing a structural enclosure comprising a sheet material on the at least one electrical isolation layer, and optionally embossing or roll forming the sheet material;
joining the upper portion of the structural enclosure with the lower portion of the structural enclosure to form the seam portion; and
folding the battery module about the plurality of module folding lines to form the folded structural enclosure of layered folded portions.

15. Method for disassembling the battery module according to any one of claims 1 to 12, the method comprising:
unfolding the folded structural enclosure along the module folding lines;
cutting the at least one seam portion from the structural enclosure;
removing the structural enclosure and the at least one electrical isolation layer; and
cutting the terminals of the plurality of pouch battery cells to separate the respective pouch battery cells.
